# EUROPEAN PATENT SPECIFICATION

(11) **EP 3 637 037 B1**
(45) Date of publication and mention of the grant of the patent: **01.06.2022**
(21) Application number: 18814226.9
(22) Date of filing: 07.05.2018
(51) Int. Cl.: F42B 1/02, B01J 3/08, C01B 32/26, C06B 25/08, F42D 3/00

(54) **METHOD FOR SYNTHESIZING NANODIAMOND USING AN EXPLOSIVE BODY**
VERFAHREN FÜR NANODIAMANTSYNTHESE MIT EINEM SPRENGKÖRPER
METHODE DE SYNTHÈSE DE NANODIAMANTS UTILISANT UN CORPS EXPLOSIF

(30) Priority: 06.06.2017 JP 2017111342
(43) Date of publication of application: 15.04.2020
(73) Proprietor: Daicel Corporation, Osaka-shi, Osaka 530-0011 (JP); National University Corporation Kumamoto University, Kumamoto-shi, Kumamoto 860-8555 (JP)
(72) Inventor: MAHIKO, Tomoaki, Himeji-shi, Hyogo 671-1283 (JP); INA, Tomohide, Himeji-shi, Hyogo 671-1283 (JP); ISHIMOTO, Daisuke, Tatsuno-shi, Hyogo 671-1681 (JP); HOKAMOTO, Kazuyuki, Kumamoto-shi, Kumamoto 860-8555 (JP); TANAKA, Shigeru, Kumamoto-shi, Kumamoto 860-8555 (JP)
(74) Representative: Grünecker Patent- und Rechtsanwälte PartG mbB
(86) International application number: PCT/JP2018/017593
(87) International publication number: WO 2018/225433

(56) References cited:
- JP-A- H02 237 634
- JP-A- H06 296 445
- JP-A- 2005 013 838
- JP-A- 2010 254 529
- JP-A- 2014 144 903
- US-A- 5 765 923
- US-A1- 2014 299 011
- US-B1- 6 170 398
- US-B1- 7 493 861

## Description

### Technical Field

The present invention relates to a method for synthesizing nanodiamond using an explosive body. The present application claims priority to JP 2017-111342, filed on 6 June 2017.

### Background Art

US2014/299011 A1 discloses an explosive body for nanodiamond synthesis, comprising an explosive main body, the explosive main body including a frustum part including an upper bottom surface including an open end of a triggering unit receiving hole and an angled side surface forming an imaginary apex angle on the upper bottom surface side, and a columnar part formed contiguous with the frustum part on an opposite side of the frustum part to the upper bottom surface thereof and extending in a direction away from the upper bottom surface.

D5 discloses a method for synthesizing nanodiamond using an explosive body.

In recent years, development of particulate diamond materials, which are called nanodiamonds, has been advanced. A detonation method is known as a nanodiamond synthesis method. In the detonation method, for example, an explosive having a predetermined composition is detonated in a sealed container, whereby during the detonation, the explosive that is used undergoes partially incomplete combustion and releases carbon, and with this carbon being used as a raw material, nanodiamonds are produced by the action of pressure and energy of shock waves that are produced in the explosion. Technology relating to a detonation method like this is described, for example, in Patent Documents 1 to 3 listed below.

### Citation List

### Patent Document

Patent Document 1: JP 2005-289677A
Patent Document 2: JP 2014-144903A
Patent Document 3: JP 2016-113310A

### Summary of Invention

### Technical Problem

Improvement of a yield of a product, i.e., nanodiamonds is demanded in the detonation method, which is employed as a nanodiamond synthesis method.

The present invention has been conceived under such circumstances, and an object of the present invention is to provide an improved method for synthesizing nanodiamond using an explosive body.

### Solution to Problem

The above and other objects of the invention are achieved by the method for synthesizing nanodiamond using an explosive body according to claim 1. Preferred embodiments are claimed in the dependent claims.

The present invention relates to a method for synthesizing nanodiamond using an explosive body. The explosive body includes an explosive main body including a frustum part and a columnar part. The frustum part includes an upper bottom surface including an open end of a triggering unit receiving hole and an angled side surface forming an imaginary apex angle on the upper bottom surface side. The columnar part is formed contiguous with the frustum part on an opposite side of the frustum part to the upper bottom surface thereof and extends in a direction away from the upper bottom surface. In the explosive body for nanodiamond synthesis, specifically, the upper bottom surface of the frustum part is smaller than a lower bottom plane of the frustum part, where the lower bottom plane is an imaginary surface at the boundary between the columnar part and the frustum part. Furthermore, the angled side surface of the frustum part between the upper bottom surface and the lower bottom plane is angled in a manner in which an imaginary apex angle is formed on the upper bottom surface side. That is, in the frustum part, cross-sectional area perpendicular to a direction of separation between the lower bottom plane and the upper bottom surface gradually decreases from the imaginary lower bottom plane, which is relatively large, to the upper bottom surface, which is relatively small. In addition, a bottom plane of the columnar part, which is an imaginary surface at the boundary between the columnar part and the frustum part, is contiguous with the imaginary lower bottom plane of the frustum part. The explosive body for nanodiamond synthesis like this is used in a state in which the triggering unit, which is a unit for triggering explosion, is, for example, inserted into the triggering unit receiving hole of the explosive main body, and explosion of the explosive main body is triggered by the triggering unit attached to the explosive main body.

To properly trigger explosion of the explosive for nanodiamond synthesis, explosive phenomenon for triggering explosion by the unit for triggering explosion has to occur within the explosive main body, with energy for triggering explosion being supplied to the unit for triggering explosion in a state, in which the unit for triggering explosion or a part of the triggering unit is inserted, by a certain distance, into the explosive main body. In addition, the energy for triggering explosion proceeds in the unit for triggering explosion attached to the explosive main body, to be propagated from a part of the unit for triggering explosion on the outside of the explosive main body to a part of the unit for triggering explosion on the inside of the explosive main body. Regarding such an explosive body for nanodiamond synthesis, the present inventors have found that, in a certain surface including an open end of a receiving hole for the unit for triggering explosion, the greater the distance from the open end is, in other words, the greater the distance from the unit for triggering explosion attached to the explosive main body is, the more difficult it is to achieve steady state detonation after ignition or triggering.

As described above, the explosive main body of the explosive body for nanodiamond synthesis according to an embodiment of the present invention includes the frustum part in which cross-section area perpendicular to a direction of separation between the lower bottom plane and the upper bottom surface gradually decreases from the imaginary lower bottom plane, which is relatively large, to the upper bottom surface, which is relatively small, and the small upper bottom surface of the frustum part includes the open end of the triggering unit receiving hole. A configuration like this is suitable for reducing, in and near the surface (the upper bottom surface) including the open end of the triggering unit receiving hole, a region where a steady state detonation after triggering is less likely to occur, and thus suitable for increasing the proportion of the region where the steady state detonation after triggering occurs, in the entirety of the explosive main body. The explosive body for nanodiamond synthesis is suitable for improving a yield in the synthesis of nanodiamond by a detonation method.

In the method for synthesizing nanodiamond, the imaginary apex angle formed by the angled side surface of the frustum part is preferably from 20° to 130°, and more preferably from 20° to 30°. This configuration contributes to improving a yield in nanodiamond synthesis by the detonation method that uses the explosive body for nanodiamond synthesis.

In the method for synthesizing nanodiamond, the frustum part preferably has a frustoconical shape. Furthermore, in the method for synthesizing nanodiamond, it is preferable that the frustum part has a frustoconical shape, the columnar part has a round column shape, and the explosive main body is a rotationally symmetric body. The more symmetric the shape of the explosive main body is, the more suitable for increasing the proportion of the region where the steady state detonation occurs, in the entirety of the explosive main body, and thus the more suitable for improving the yield of nanodiamonds.

In the method for synthesizing nanodiamond the explosive body preferably further includes a triggering unit having a part inserted into the triggering unit receiving hole. The triggering unit preferably includes a detonator part and a booster part. The booster part is preferably positioned in a straddling manner at a boundary between the frustum part and the columnar part. A length of an inserted part of the triggering unit inserted into the triggering unit receiving hole, that is, an insertion length L of the triggering unit into the explosive main body is preferably from 1 to 50 mm, more preferably from 2 to 40 mm, and still more preferably from 5 to 30 mm. The method for synthesizing nanodiamond having the configuration, in which the above-described triggering unit is provided as a unit for triggering explosion, is suitable for efficiently triggering explosion of the explosive main body, and thus useful to improve the yield of the nanodiamonds.

In the method for synthesizing nanodiamond the explosive main body preferably includes a composite explosive. The composite explosive preferably includes, as an explosive main agent, 2,4,6-trinitrotoluene (TNT) and hexogen (RDX). The mass ratio of TNT and RDX in the explosive main agent in the composite explosive is preferably from 30:70 to 70:30. These configurations are suitable for synthesizing nanodiamonds by the detonation method.

### Brief Description of Drawings

FIG. 1 is a perspective view of an explosive body used in a method for synthesizing nanodiamond according to an embodiment of the present invention.
FIG. 2 is a cross-sectional view along a line II-II in FIG. 1.
FIG. 3A is a cross-sectional schematic view of an explosive body of Example 1, and FIG. 3B is a cross-sectional schematic view of an explosive body of Comparative Example 1.

### Description of Embodiments

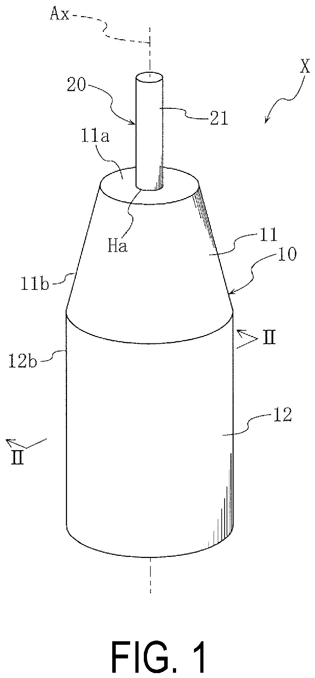

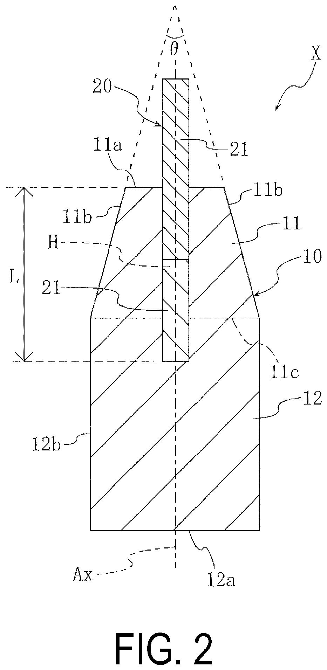

In FIGS. 1 and 2, an explosive body X, which is used in a method for synthesizing nanodiamond according to an embodiment of the present invention, is illustrated. FIG. 1 is a perspective view of the explosive body X, and FIG. 2 is a cross-sectional view along a line II-II in FIG. 1. The explosive body X includes an explosive main body 10 and a triggering unit 20, and is used in the detonation method as a nanodiamond synthesis method.

The explosive main body 10 of the explosive body X has a shape including a frustum part 11 and a columnar part 12. The frustum part 11 includes an upper bottom surface 11a and an angled side surface 11b. A hole H in which the triggering unit is received is provided in the upper bottom surface 11a. In other words, an open end Ha of the hole H is formed in the upper bottom surface 11a. The angled side surface 11b is angled forming an imaginary apex angle θ on the upper bottom surface 11a side, as illustrated in FIG. 2. Specifically, the upper bottom surface 11a of the frustum part 11 is smaller than a lower bottom plane 11c of the frustum part 11, with the lower bottom plane 11c being an imaginary surface at a boundary between the columnar part 12 and the frustum part 11. Furthermore, the angled side surface 11b of the frustum part 11 between the upper bottom surface 11a and the lower bottom plane 11c is angled forming the imaginary apex angle θ on the upper bottom surface 11a side. In the frustum part 11, cross-sectional area perpendicular to a direction of separation between the lower bottom plane 11c and the upper bottom surface 11a gradually decreases from the imaginary lower bottom plane 11c, which is relatively large, to the upper bottom surface 11a, which is relatively small. The imaginary apex angle θ formed by the angled side surface 11b is preferably from 20° to 130°, and more preferably from 20° to 30°. On the other hand, the columnar part 12 of the explosive body X includes a bottom surface 12a and a side surface 12b, and is formed contiguous with the frustum part 11 on an opposite side of the frustum part 11 to the upper bottom surface 11a thereof, i.e., contiguous with the imaginary lower bottom plane 11c, and extends in a direction away from the upper bottom surface 11a. In the present embodiment, the frustum part 11 has a frustoconical shape, the columnar part 12 has a round column shape, and the explosive main body 10 is a rotationally symmetric body having a rotation axis Ax.

An example of materials used to form the explosive main body 10 is a composite explosive. The composite explosive is an explosive composition including a powdery explosive main agent and a binder polymer. Examples of the explosive main agent include cyclotrimethylenetrinitramine (RDX), i.e., Hexogen; 2,4,6-trinitrotoluene (TNT); 2,4,6-trinitrophenylmethylnitramine; cyclotetramethylenetetranitramine, i.e., Octogen; nitroguanidine; pentaerythritol tetranitrate (PENT); and diazodinitrophenol (DDNP). The composite explosive for forming the explosive main body 10 may include a single kind of the explosive main agent or two or more kinds of the explosive main agent. In the present embodiment, the explosive main agent in the composite explosive is preferably a mixture of TNT and RDX. In this case, the mass ratio (TNT/RDX) of TNT and RDX is, for example, in a range from 30/70 to 70/30. Examples of binder polymers for the composite explosive include polyurethane and polyester. In addition to the explosive main agent and the binder polymer, the composite explosive for forming the explosive main body 10 may contain a plasticizer, an age resister, etc.

The explosive main body 10 can be produced by, for example, a cast-loading method or a press-loading method. In the cast-loading method, a mixture composition, which includes: a polymerizable component for forming the binder polymer; a reactive component such as a crosslinking agent; and the explosive main agent particles, is poured into a mold and then cured, whereby the explosive main body is formed. In the press-loading method, first, the binder polymer dissolved in a solvent and the explosive main agent particles are mixed in water, and then the solvent in the mixture is volatilized. As a result, composite particles, which are the explosive main agent particles having thereon binder polymer coating, are produced. Next, the composite particles thus produced are pressed while being heated, if necessary, in a press-loading container. In this way, the explosive main body is formed.

The triggering unit 20 of the explosive body X is a unit for triggering explosion, which is configured to trigger explosion of the explosive main body 10 when using the explosive body X, and the triggering unit 20 is inserted into the above-described hole H of the explosive main body 10 and attached to the explosive main body 10. The triggering unit 20 includes a detonator part 21 and a booster part 22 in the present embodiment. Examples of detonators that can be used as the detonator part 21 include an instantaneous electric detonator, a delay electric detonator, an antistatic electric detonator, an electronic delay detonator, and a blasting cap. Examples of boosters that can be used as the booster part 22 include high sensitive explosives containing, as a base agent, 2,4,6-trinitrophenylmethylnitramine, pentaerythritol tetranitrate, RDX, a mixture of TNT and RDX. The booster part 22 is preferably positioned in a straddling manner at a boundary between the frustum part 11 and the columnar part 12, as illustrated in FIG. 2. A length L of an inserted part of the triggering unit 20 inserted into the hole H in which the triggering unit is received, that is, an insertion length L of the triggering unit 20 into the explosive main body 10 is preferably from 1 to 50 mm, more preferably from 2 to 40 mm, and still more preferably from 5 to 30 mm.

The explosive body X like this can be used for nanodiamond synthesis by the detonation method, for example, as described below.

In the detonation method for synthesizing nanodiamonds, first, the above-described explosive body X is placed in a pressure-resistant container, and the container is sealed in a state in which a predetermined gas and an explosive to be used coexist in the container. The container is made of iron, for example, and the volume of the container is, for example, from 0.5 to 40 m³. The explosive body X is preferably set in a state of being suspended in the container. For example, such suspension of the explosive body X inside the container can be achieved by using a lead wire for supplying current to the triggering unit 20 or the detonator part 21 of the explosive body X, with the lead wire also serving as a rope for suspending the explosive body X. Furthermore, for the explosive body X to be suspended, an adhesive tape may be used to more securely fix the triggering unit 20 to the explosive main body 10 to prevent the triggering unit 20 from being detached from the explosive main body 10. The usage amount or weight of the explosive main body 10 is, for example, from 0.05 to 2.0 kg. The gas that is sealed in the container along with the explosive that is used may have an atmospheric composition or may be an inert gas. From the viewpoint of forming nanodiamonds having smaller amounts of functional groups on the surfaces of the primary particles, the gas sealed inside the container along with the explosive that is used is preferably an inert gas. That is, from the viewpoint of forming nanodiamonds having smaller amounts of functional groups on the surfaces of the primary particles, the detonation method for forming nanodiamonds is preferably performed in an inert gas atmosphere. As the inert gas, for example, at least one selected from nitrogen, argon, carbon dioxide, and helium can be used.

In the detonation method, the triggering unit 20 is then ignited in the container and caused to explode. The explosion of the triggering unit 20 triggers explosion of the explosive main body 10, and as a result, detonation occurs. The triggering unit 20 is ignited when energy for triggering explosion, e.g., electrical power, is supplied to the detonator part 21 of the triggering unit 20. "Detonation" refers to, among explosive reactions associated with chemical reactions, detonation that involves a flame surface exhibiting the reaction and traveling at a high speed exceeding the speed of sound. During the detonation, the explosive to be used undergoes partially incomplete combustion and releases carbon, and with this carbon being used as a raw material, nanodiamonds are produced by the action of pressure and energy of shock waves that are produced in the explosion. By using the detonation method, nanodiamonds having a primary particle size of 10 nm or smaller can be appropriately generated. In the formation of the nanodiamonds, first, a product obtained by the detonation method is subjected to Coulomb interaction between crystal planes, in addition to Van der Walls forces between adjacent primary particles or crystallites, and as a result, the product very firmly aggregates to form aggregates. In this way, nanodiamonds can be synthesized by the detonation method that uses the explosive body X.

After the detonation method is executed, the container and its content were cooled by being left to stand, for example, for 24 hours at room temperature. After this cooling, a nanodiamond crude product is collected. The nanodiamond crude product can be collected, for example, by scraping with a spatula the nanodiamond crude product (including soot and the nanodiamond aggregates produced as described above) deposited on the inner wall of the container. A desired amount of the nanodiamond crude product can be obtained by executing the above-described detonation method, as necessary, several times. The nanodiamond crude product produced as described above is optionally purified.

As described above, the explosive main body 10 of the explosive body X includes the frustum part 11 in which cross-sectional area perpendicular to a direction of separation between the lower bottom plane 11c and the upper bottom surface 11a gradually decreases from the imaginary lower bottom plane 11c, which is relatively large, to the upper bottom surface 11a, which is relatively small, and the small upper bottom surface 11a of the frustum part 11 includes the open end Ha of the hole H in which the triggering unit is received. Such a configuration is suitable for reducing, in and near the surface including the open end of the hole in which the triggering unit is received (the upper bottom surface 11a of the explosive main body 10), a region, in which a steady-state detonation after triggering is less likely to occur, and thus suitable for increasing the proportion of the region, in which the steady-state detonation after triggering occurs, in the entirety of the explosive main body. The explosive body X like this is suitable for improving a yield in the synthesis of nanodiamond by the detonation method.

In the explosive body X, the imaginary apex angle θ formed by the angled side surface 11b of the frustum part 11, as illustrated in FIG. 2, is preferably from 20° to 130°, and more preferably from 20° to 30°, as described above. This configuration contributes to improving a yield in nanodiamond synthesis by the detonation method that uses the explosive body X.

In the present embodiment, the frustum part 11 has a frustoconical shape, as described above. Furthermore, in the present embodiment, as described above, the frustum part 11 has a frustoconical shape, the columnar part 12 has a round column shape, and the explosive main body 10 is a rotationally symmetric body. The more symmetric the shape of the explosive main body 10 is, the more suitable for increasing the proportion of the region, in which the steady-state detonation occurs, in the entirety of the explosive main body 10, and thus the more suitable for improving the yield of nanodiamonds.

In addition, in the present embodiment, as described above, the explosive body X includes the triggering unit 20 including the detonator part 21 and the booster part 22, and the booster part 22 is preferably positioned in a straddling manner at a boundary between the frustum part 11 and the columnar part 12. A length L of an inserted part of the triggering unit 20 which is inserted into the hole H in which the triggering unit is received, that is, an insertion length L of the triggering unit 20 into the explosive main body 10 is preferably from 1 to 50 mm, more preferably from 2 to 40 mm, and still more preferably from 5 to 30 mm, as described above. The explosive body X having a configuration in which the above-described triggering unit 20 is provided as a unit for triggering explosion is suitable for efficiently triggering explosion of the explosive main body 10, and thus useful to improve the yield of the nanodiamonds.

The nanodiamond crude product produced by the detonation method can be subjected to, for example, purifying, as describe below, whereby cluster nanodiamonds can be produced.

The purifying includes an acid treatment in which a strong acid is allowed to act on the nanodiamond crude product in an aqueous solvent, for example. The nanodiamond crude product obtained by the detonation method is prone to include metal oxide, and this metal oxide is an oxide of metals such as Fe, Co, or Ni derived from the container or the like used in the detonation method. The metal oxide can be dissolved and removed from the nanodiamond crude product by allowing a predetermined strong acid to act thereon (acid treatment) in an aqueous solvent, for example. The strong acid used in the acid treatment is preferably a mineral acid, and examples thereof include hydrochloric acid, hydrofluoric acid, sulfuric acid, nitric acid, and aqua regia. In the acid treatment, one kind of strong acid may be used alone, or two or more kinds of strong acids may be used in combination. The concentration of the strong acid used in the acid treatment is, for example, from 1 to 50 mass%. The acid treatment temperature is from 70 to 150°C, for example. The duration of the acid treatment is, for example, from 0.1 to 24 hours. Furthermore, the acid treatment can be performed under reduced pressure, atmospheric pressure, or under pressurization. After such acid treatment, the solid content (including nanodiamond aggregates) is washed with water by decantation, for example. Washing of the solid content by decantation is preferably repeated until pH of a precipitate solution reaches 2 to 3, for example. In a case where the content amount of metal oxide in the nanodiamond crude product obtained by the detonation method is small, the acid treatment such as that described above may be omitted.

The purifying includes a solution oxidation treatment for removing non-diamond carbon, such as graphite or amorphous carbon, from the nanodiamond crude product (nanodiamond aggregates prior to completion of purifying) by using an oxidizing agent. The nanodiamond crude product obtained by the detonation method contains non-diamond carbon, such as graphite or amorphous carbon, and this non-diamond carbon derives from carbon that did not form nanodiamond crystals from among the carbons released when the explosive used underwent partially incomplete combustion. For example, the non-diamond carbon can be removed from the nanodiamond crude product by, for example, allowing a predetermined oxidizing agent to act thereon in an aqueous solvent (solution oxidation treatment) after the acid treatment described above. Examples of the oxidizing agent used in the solution oxidation treatment include chromic acid, chromic anhydride, dichromic acid, permanganic acid, perchloric acid, and salts thereof, nitric acid, and mixed acids (mixture of sulfuric acid and nitric acid). In the solution oxidation treatment, one kind of oxidizing agent may be used alone, or two or more kinds of oxidizing agents may be used in combination. The concentration of the oxidizing agent used in the solution oxidation treatment is, for example, from 3 to 50 mass%. The amount of the oxidizing agent used in the solution oxidation treatment is, for example, from 300 to 2000 parts by mass per 100 parts by mass of the nanodiamond crude product that is subjected to solution oxidation treatment. The solution oxidation treatment temperature is, for example, from 50 to 250°C. The duration for solution oxidation treatment is, for example, from 1 to 72 hours. The solution oxidation treatment can be performed under reduced pressure, atmospheric pressure, or under pressurization. After such solution oxidation treatment, the solid content (including nanodiamond aggregates) is washed with water by decantation, for example. With the initial supernatant liquid at an early stage of the water washing being colored, it is preferable to repeat the washing of the solid content by decantation until the supernatant liquid becomes visually clear.

### Examples

### Example 1

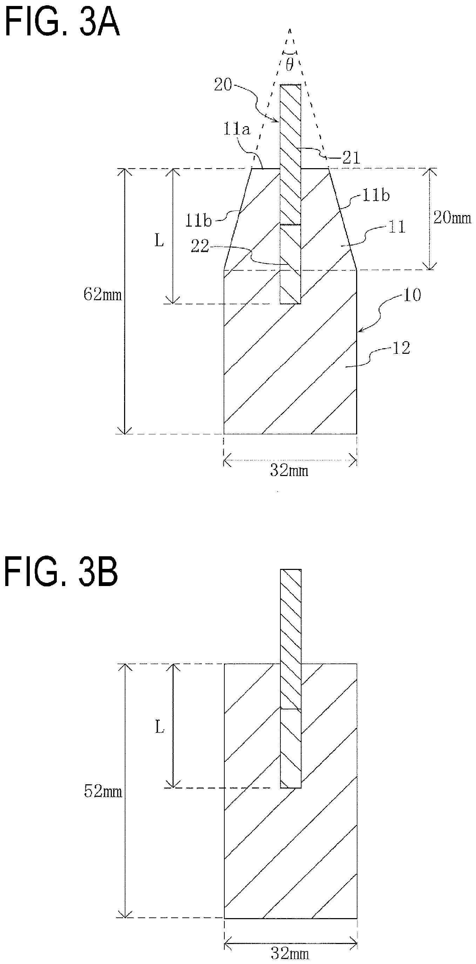

An explosive body of Example 1 having dimensions as specified in FIG. 3A was prepared. The explosive main body 10 of the explosive body of Example 1 was a formed body of explosive including the frustum part 11 having a frustoconical shape and the columnar part 12 having a round column shape, and included, as an explosive main agent, trinitrotoluene (TNT) and hexogen (RDX). The mass of the explosive main body 10 was 70 g and had a density of 1.68 g/cm³. The mass ratio (TNT/RDX) of TNT and RDX in the explosive main agent of the explosive main body 10 was 50/50. The imaginary apex angle θ formed by the angled side surface 11b of the frustum part 11 of the explosive main body 10 was 23°. The triggering unit 20 of the explosive body of Example 1 included the detonator part 21 and the booster part 22. The detonator part 21 was a No. 6 detonator having a round column shape (trade name: "No. 6 instantaneous electric detonator", diameter 6.9 mm × length 50 mm, manufactured by Kayaku Japan Co., Ltd). The booster part 22 had a round column shape with a diameter of approximately 7 mm and a height of 14 mm, and was formed of 800 mg of a booster explosive. The insertion length L of the triggering unit 20 into the explosive main body 10 was 30 mm. An adhesive tape (not illustrated) was used to reinforce an attached state or a fixed state of the triggering unit 20 attached to the explosive main body 10.

The detonation method, as a nanodiamond synthesis method, using the explosive body of Example 1 was executed in a nitrogen atmosphere. Specifically, the explosive body of Example 1 was suspended, by using a lead wire for supplying current to the detonator part of the explosive body, in a detonation chamber (iron chamber, volume 15 m³), which is a pressure-resistant container, and the chamber was sealed. Under this condition, the detonator part 21 was activated, in a nitrogen atmosphere, to trigger explosion of the triggering unit 20, thereby triggering explosion of the explosive main body 10, and as a result, detonation was generated. The detonation chamber and its contents were cooled by being left to stand for 24 hours at room temperature, and then a nanodiamond crude product (including soot and nanodiamond particle aggregates produced by the detonation method described above) in the chamber was collected. The collected nanodiamond crude product was purified as described below, and the purified nanodiamonds was weighed. Then, a yield (%) of nanodiamond (ND) was calculated by dividing the mass of the purified nanodiamonds by the mass of the above-described explosive main body (70 g). The yield of ND is shown in Table 1.

The detonation method, as a nanodiamond synthesis method, using the explosive body of Example 1 was executed in a carbon dioxide atmosphere. Specifically, the explosive body of Example 1 was suspended, by using a lead wire for supplying current to the detonator part of the explosive body, in a detonation chamber (iron chamber, volume 15 m³), which was a pressure-resistant container, and the chamber was sealed. Under this condition, the detonator part 21 was activated, in a carbon dioxide atmosphere, to trigger explosion of the triggering unit 20, thereby triggering explosion of the explosive main body 10, and as a result, detonation was generated. The detonation chamber and its contents were cooled by being left to stand for 24 hours at room temperature, and then a nanodiamond crude product (including soot and nanodiamond particle aggregates produced by the detonation method described above) in the chamber was collected. The collected nanodiamond crude product was purified as described below, and the purified nanodiamonds was weighed. Then, a yield (%) of nanodiamond (ND) was calculated by dividing the mass of the purified nanodiamonds by the mass of the above-described explosive main body (70 g). The yield of ND is shown in Table 1.

The detonation method, as a nanodiamond synthesis method, using the explosive body of Example 1 was executed in an argon atmosphere. Specifically, the explosive body of Example 1 was suspended, by using a lead wire for supplying current to the detonator part of the explosive body, in a detonation chamber (iron chamber, volume 15 m³), which is a pressure-resistant container, and the chamber was sealed. Under this condition, the detonator part 21 was activated, in the argon atmosphere, to trigger explosion of the triggering unit 20, thereby triggering explosion of the explosive main body 10, and as a result, detonation was generated. The detonation chamber and its contents were cooled by being left to stand for 24 hours at room temperature, and then a nanodiamond crude product (including soot and nanodiamond particle aggregates produced by the detonation method described above) in the chamber was collected. The collected nanodiamond crude product was purified as described below, and the purified nanodiamonds was weighed. Then, a yield (%) of nanodiamond (ND) was calculated by dividing the mass of the purified nanodiamonds by the mass of the above-described explosive main body (70 g). The yield of ND is shown in Table 1.

### Examples 2 to 4

Detonation methods similar to those described above in relation to Example 1, (the detonation method in a nitrogen atmosphere, the detonation method in a carbon dioxide atmosphere, and the detonation method in an argon atmosphere) that use explosive bodies of Examples 2 to 4 were executed. The explosive bodies of Examples 2 to 4 were prepared in accordance with the same design as those of Example 1 except that the imaginary apex angle θ was set, instead of 23°, to 30° (for Example 2), 90° (for Example 3), or 120° (for Example 4). Furthermore, as described above in relation to Example 1, the nanodiamond crude product produced by each of the detonation methods was purified, and then a yield (%) of nanodiamond (ND) was calculated. The yield of ND is shown in Table 1.

### Comparative Example 1

Detonation methods similar to those described above in relation to Example 1, (the detonation method in a nitrogen atmosphere, the detonation method in a carbon dioxide atmosphere, and the detonation method in an argon atmosphere) hat use an explosive body of Comparative Example 1 having the dimensions specified in FIG. 3B were executed. An explosive main body of a detonation body of Comparative Example 1 had a round column shape with a height of 52 mm and a bottom surface having a diameter of 32 mm, and was formed from the same material (including TNT and RDX) as that of the explosive main body 10 of Example 1. The mass of the explosive main body of Comparative Example 1 was 70 g. A triggering unit (a detonator part and a booster part) of an explosive body of Comparative Example 1 was configured in the same manner as the triggering unit 20 (the detonator part 21 and the booster part 22) in Example 1, and the insertion length L of the triggering unit into the explosive main body was 30 mm. Furthermore, similarly to those described above in relation to Example 1, the nanodiamond crude product produced by each of the detonation methods was purified, and then a yield (%) of nanodiamond (ND) was calculated. The yield of ND is shown in Table 1.

### Purification of Nanodiamonds

Purifying as described below was performed and cluster nanodiamonds were produced.

Firs, a nanodiamond crude product produced by the detonation method was subjected to an acid treatment in the purifying. Specifically, a slurry obtained by adding 6 L of 10 mass% hydrochloric acid to 200 g of the nanodiamond crude product was subjected to heating treatment for 1 hour under reflux at normal pressure conditions. The heating temperature in this acid treatment was from 85 to 100°C. Next, after cooling, the solid content (including nanodiamond aggregates and soot) was washed with water by decantation. Washing of the solid content by decantation was repeated until pH of a precipitate solution reached 2 from the low pH side. Next, mixed acid treatment was performed as solution oxidation treatment in the purifying. Specifically, a slurry was formed by adding 6 L of a 98 mass% sulfuric acid aqueous solution and 1 L of a 69 mass% nitric acid aqueous solution to a precipitate solution (containing nanodiamond aggregates) obtained through decantation after the acid treatment, and subsequently, the slurry was subjected to heat treatment under reflux for 48 hours at normal pressure conditions. The heating temperature in this oxidation treatment was from 140 to 160°C. Next, after cooling, the solid content (including nanodiamond aggregates) was washed with water by decantation. With the supernatant liquid at an early stage of the water washing being colored, the washing of the solid content by decantation was repeated until the supernatant liquid became visually clear. The supernatant was then removed by decantation. Furthermore, the residual fraction after decantation was subjected to drying treatment, whereby a dry powder (nanodiamond powder) was obtained. As a technique for the drying treatment, evaporation to dryness with the use of an evaporator was adopted. As a result, a powder of cluster nanodiamonds was obtained from the nanodiamond crude product produced by the detonation method.

### Evaluation

The explosive main bodies 10 of the explosive bodies of Examples 1 to 4 each had a shape in which the frustum part 11 having a frustoconical shape and the columnar part 12 having a round column shape are contiguous with each other were continuously formed. The explosive main bodies 10 of Examples 1 to 4 achieved higher nanodiamond yields in the detonation method than the explosive main body of Comparative Example 1 which has a round column shape.

**[Table 1]**

| | | Example 1 | Example 2 | Example 3 | Example 4 | Comparative Example 1 |
|---|---|---|---|---|---|---|
| Apex angle θ (°) | | 23 | 30 | 90 | 120 | - |
| Yield of ND (%) | Nitrogen atmosphere | 0.90 | 0.89 | 0.77 | 0.72 | 0.60 |
| | Carbon dioxide atmosphere | 1.60 | 1.59 | 1.47 | 1.42 | 1.30 |
| | Argon atmosphere | 0.40 | 0.39 | 0.27 | 0.22 | 0.10 |

### Reference Sings List

X Explosive body (explosive body for nanodiamond synthesis)
10 Explosive main body
11 Frustum part
11a Upper bottom surface
11b Angled side surface
12 Columnar part
20 Triggering unit
21 Detonator part
22 Booster part
H Hole (triggering unit receiving hole)
Ha Open end

## Claims

1. A method for synthesizing nanodiamond using an explosive body (X), said explosive body (X) comprising an explosive main body (10), the explosive main body (10) including
a frustum part (11) including an upper bottom surface (11a) including an open end of a triggering unit receiving hole (H) and an angled side surface (11b) forming an imaginary apex angle (θ) on the upper bottom surface (11a) side, and
a columnar part (12) formed contiguous with the frustum part (11) on an opposite side of the frustum part (11) to the upper bottom surface (11a) thereof and extending in a direction away from the upper bottom surface (11a).

2. The method for synthesizing nanodiamond according to claim 1, wherein
the imaginary apex angle (θ) is from 20° to 130°.

3. The method for synthesizing nanodiamond according to claim 1, wherein
the imaginary apex angle (θ) is from 20° to 30°.

4. The method for synthesizing nanodiamond according to any one of claims 1 to 3, wherein
the frustum part (11) has a frustoconical shape.

5. The method for synthesizing nanodiamond according to any one of claims 1 to 4, e Wherein the explosive body (X) further comprises a triggering unit (20) having a part inserted into the triggering unit receiving hole (H).

6. The method for synthesizing nanodiamond according to claim 5, wherein
the triggering unit (20) includes a detonator part (21) and a booster part (22).

7. The method for synthesizing nanodiamond according to claim 6, wherein
the booster part (22) is positioned in a straddling manner at a boundary between the frustum part (11) and the columnar part (12).

8. The method for synthesizing nanodiamond according to any one of claims 5 to 7, wherein
a length (L) of an inserted part of the triggering unit (20) inserted into the triggering unit receiving hole (H) is from 1 to 50 mm.

9. The method for synthesizing nanodiamond according to any one of claims 1 to 8, wherein
the explosive main body (10) includes a composite explosive.

10. The method for synthesizing nanodiamond according to claim 9, wherein
the composite explosive includes, as an explosive main agent, 2,4,6-trinitrotoluene and hexogen.

## Patentansprüche

1. Verfahren zum Synthetisieren von Nanodiamant unter Verwendung eines Sprengstoffkörpers (X), wobei der Sprengstoffkörper (X) einen Sprengstoff-Hauptkörper (10) umfasst und der Sprengstoff-Hauptkörper (10) einschließt:
einen Stumpf-Teil (11), der eine obere Bodenfläche (11a), die ein offenes Ende eines Aufnahmelochs (H) einer Auslöse-Einheit einschließt, sowie eine abgeschrägte Seitenfläche (11b) enthält, die einen imaginären Spitzenwinkel (θ) an der Seite der oberen Bodenfläche (11a) bildet, und
einen säulenförmigen Teil (12), der an den Stumpf-Teil (11) angrenzend an einer der oberen Bodenfläche (11a) des Stumpf-Teils (11) gegenüberliegenden Seite desselben ausgebildet ist und sich in einer Richtung von der oberen Bodenfläche (11a) weg erstreckt.

2. Verfahren zum Synthetisieren von Nanodiamant nach Anspruch 1, wobei der imaginäre Spitzenwinkel (θ) von 20° bis 130° reicht.

3. Verfahren zum Synthetisieren von Nanodiamant nach Anspruch 1, wobei der imaginäre Spitzenwinkel (θ) von 20° bis 30° reicht.

4. Verfahren zum Synthetisieren von Nanodiamant nach einem der Ansprüche 1 bis 3, wobei der Stumpf-Teil (11) kegelstumpfförmig ist.

5. Verfahren zum Synthetisieren von Nanodiamant nach einem der Ansprüche 1 bis 4, wobei der Sprengkörper (X) des Weiteren eine Auslöse-Einheit (20) mit einem in das Aufnahmeloch (H) der Auslöse-Einheit eingeführten Teil umfasst.

6. Verfahren zum Synthetisieren von Nanodiamant nach Anspruch 5, wobei die Auslöse-Einheit (20) einen Detonator-Teil (21) sowie einen Booster-Teil (22) enthält.

7. Verfahren zum Synthetisieren von Nanodiamant nach Anspruch 6, wobei der Booster-Teil (22) überspannend an einer Grenze zwischen dem Stumpf-Teil (11) und dem säulenförmigen Teil (12) positioniert ist.

8. Verfahren zum Synthetisieren von Nanodiamant nach einem der Ansprüche 5 bis 7, wobei eine Länge (L) eines eingeführten Teils der Auslöse-Einheit (20), der in das Aufnahmeloch (H) der Auslöse-Einheit eingeführt ist, zwischen 1 und 50 mm beträgt.

9. Verfahren zum Synthetisieren von Nanodiamant nach einem der Ansprüche 1 bis 8, wobei der Sprengstoff-Hauptkörper (10) einen Verbund-Sprengstoff enthält.

10. Verfahren zum Synthetisieren von Nanodiamant nach Anspruch 9, wobei der Verbund-Sprengstoff als explosiven Hauptwirkstoff 2,4,6-Trinitrotoluol und Hexogen enthält.

## Revendications

1. Procédé de synthèse de nano-diamants à l'aide d'un corps explosif (X), ledit corps explosif (X) comprenant un corps explosif principal (10), le corps explosif principal (10) comprenant
une partie de tronc (11) comprenant une surface de fond supérieure (11a) comportant une extrémité ouverte d'un trou de réception d'unité de déclenchement (H), et une surface latérale inclinée (11b) formant un angle de sommet imaginaire (θ) sur le côté de la surface de fond supérieure (11a), et
une partie de colonne (12) formée de manière adjacente à la partie de tronc (11) sur un côté opposé de la partie de tronc (11) sur sa surface de fond supérieure (11a) et s'étendant dans une direction qui s'éloigne de la surface de fond supérieure (11a).

2. Procédé de synthèse de nano-diamants selon la revendication 1, dans lequel
l'angle de sommet imaginaire (θ) est compris entre 20° et 130°.

3. Procédé de synthèse de nano-diamants selon la revendication 1, dans lequel
l'angle de sommet imaginaire (θ) est compris entre 20° et 30°.

4. Procédé de synthèse de nano-diamants selon l'une quelconque des revendications 1 à 3, dans lequel
la partie de tronc (11) présente une forme tronconique.

5. Procédé de synthèse de nano-diamants selon l'une quelconque des revendications 1 à 4, dans lequel
le corps explosif (X) comprend en outre une unité de déclenchement (20) comportant une partie insérée dans le trou de réception d'unité de déclenchement (H).

6. Procédé de synthèse de nano-diamants selon la revendication 5, dans lequel
l'unité de déclenchement (20) comprend une partie de détonateur (21) et une partie de booster (22).

7. Procédé de synthèse de nano-diamants selon la revendication 6, dans lequel
la partie de booster (22) est positionnée de manière chevauchante sur une délimitation entre la partie de tronc (11) et la partie de colonne (12).

8. Procédé de synthèse de nano-diamants selon l'une quelconque des revendications 5 à 7, dans lequel
une longueur (L) d'une partie insérée de l'unité de déclenchement (20) insérée dans le trou de réception d'unité de déclenchement (H) est comprise entre 1 et 50 mm.

9. Procédé de synthèse de nano-diamants selon l'une quelconque des revendications 1 à 8, dans lequel
le corps explosif principal (10) comprend un explosif composite.

10. Procédé de synthèse de nano-diamants selon la revendication 9, dans lequel
l'explosif composite comprend, comme agent explosif principal, du 2,4,6-trinitrotoluène et de l'hexogène.
